# EUROPÄISCHE PATENTSCHRIFT

(11) **EP 2 303 502 B1**
(45) Veröffentlichungstag und Bekanntmachung des Hinweises auf die Patenterteilung: **25.06.2014**
(21) Anmeldenummer: 09757131.9
(22) Anmeldetag: 03.06.2009
(51) Int. Cl.: B23K 26/08, B23K 26/14

(54) **VORRICHTUNG UND VERFAHREN ZUM SCHNEIDENDEN BEARBEITEN VON WERKSTÜCKEN MIT EINEM LASERSTRAHL**
METHOD AND DEVICE FOR LASER CUTTING
PROCÉDÉ ET APPAREIL DE DÉCOUPE AU LASER

(30) Priorität: 04.06.2008 DE 102008027524
(43) Veröffentlichungstag der Anmeldung: 06.04.2011
(73) Patentinhaber: Fraunhofer-Gesellschaft zur Förderung der angewandten Forschung e.V., 80686 München (DE)
(72) Erfinder: BARTELS, Florian, 01099 Dresden (DE); MORGENTHAL, Lothar, 01187 Dresden (DE); SCHWARZ, Thomas, 01728 Bannewitz (DE); HIMMER, Thomas, 01099 Dresden (DE)
(74) Vertreter: Pfenning, Meinig & Partner GbR
(86) Internationale Anmeldenummer: PCT/DE2009/000815
(87) Internationale Veröffentlichungsnummer: WO 2009/146697

(56) Entgegenhaltungen:
- EP-A1- 1 475 182
- DE-A1- 3 036 427
- DE-A1-102005 027 836
- US-B1- 6 384 370

## Beschreibung

Die Erfindung betrifft eine Vorrichtung und ein Verfahren zum schneidenden Bearbeiten von Werkstücken mit einem Laserstrahl. Dabei soll ein Laserstrahl auf die Oberfläche eines Werkstücks gerichtet werden, wobei der Vorschub durch eine zweidimensionale Relativbewegung von Laserstrahl und Werkstück gemeinsam mit einer gezielten Auslenkung des Laserstrahls mit mindestens einem schwenkbaren reflektierenden Element erreicht werden soll.

Um die Arbeitsproduktivität zu erhöhen und kurze Taktzeiten zu ermöglichen, ist eine hohe Vorschubgeschwindigkeit ein geforderter Parameter. Das kann in seit langem bekannter Form durch den Einsatz eines Schneidgases, das mit erhöhtem Druck auf die Werkstückoberfläche in den Schnittspalt geführt wird, unterstützt werden. Dadurch kann durch den Wärmeeintrag gebildete Schmelze ausgetrieben und sowohl die Schneidgeschwindigkeit, wie auch die Qualität der Schnittkanten verbessert werden.

Es ist aber häufig gewünscht Konturen auszubilden, was Veränderungen der Vorschubachsrichtung bei der Bearbeitung erforderlich macht. Durch größere Richtungswechsel mit kleinen Radien reduziert sich in Folge der begrenzten Maschinendynamik die mittlere Vorschubgeschwindigkeit. Außerdem sind in solchen kritischen Bearbeitungsbereichen ein starkes Abbremsen und dann wieder eine Beschleunigung der entsprechend bewegten Elemente für die Durchführung der Relativbewegung erforderlich. Daraus resultieren hohe wirkende Kräfte und Momente, die kompensiert werden müssen. Dementsprechend sollten auch die Eigenmasse der bewegten Teile so klein als möglich gehalten sein. Zur Verkürzung der erforderlichen Bearbeitungszeit ist es daher üblich die durchzuführende Relativbewegung von Laserstrahl und Werkstück mit einer Auslenkung des Laserstrahls unterstützend zu überlagern.

Der Laserstrahl wird dabei durch eine Schneidgasdüse gemeinsam mit dem Schneidgas auf die Werkstückoberfläche gerichtet. Die Schneidgasdüse weist dabei einen entsprechend großen freien Querschnitt auf, so dass ein Freiraum für den auszulenkenden Laserstrahl vorhanden ist. Ein so vergrößerter freier Querschnitt führt aber zu einem stark erhöhten Gasverbrauch, der exponentiell mit dem sich vergrößernden freien Querschnitt ansteigt. Dadurch erhöhen sich selbstverständlich die Kosten. Eine solche technische Lösung ist beispielsweise in EP 1 475 182 A1 beschrieben.

Bei anderen bereits kommerziell verfügbaren Laserbearbeitungsanlagen ist ein Schneidkopf so ausgebildet, dass der Laserstrahl durch einen Durchlasskanal und das Schneidgas durch mindestens einen weiteren gesonderten Schneidgaskanal gerichtet werden. Dabei ist zumindest die Bewegung des einen oder mehrerer Schneidgaskanäle, um den Durchlasskanal und den Laserstrahl in Abhängigkeit einer sich verändernden Vorschubachsrichtung erforderlich. Schneidgas kann so aber nicht konzentrisch mit dem Laserstrahl auf die Oberfläche des Werkstücks in den Schnittspalt gerichtet werden, was in vielen Fällen und insbesondere für die Qualität der auszubildenden Schnittkanten und die erreichbare Vorschubgeschwindigkeit sowie die erforderliche Bearbeitungszeit nachteilig ist.

Bei der Schneidbearbeitung kann normalerweise mit sehr hohen Vorschubgeschwindigkeiten gearbeitet werden. Diese sind aber erheblich reduziert, wenn größere Richtungsänderungen mit kleinen Radien durchgeführt werden müssen. Dabei wirken sich aber neben der Erhöhung der erforderlichen Bearbeitungszeit auch die demzufolge wirkenden Beschleunigungen nachteilig aus. Die ruckartig wirkenden beschleunigungsbedingten Kräfte müssen kompensiert werden, was durch eine Erhöhung der Stabilität mit einhergehender Masseerhöhung der Anlagentechnik berücksichtigt wird. Durch auftretende Grenzbelastungen der Antriebselemente können Positionierungsfehler des zum Schneiden genutzten Laserstrahls auftreten, die zu Qualitätseinbußen und ggf. zu Ausschuss führen. Außerdem wird dabei die Lebensdauer der Anlagentechnik reduziert.

Es ist daher Aufgabe der Erfindung die erforderliche Bearbeitungszeit beim Schneiden von Werkstücken mit einem Laserstrahl zu verringern und gleichzeitig den Schneidgasverbrauch und den Einfluss wirkender beschleunigungsbedingter Kräfte oder Momente zu minimieren, wodurch die Lebensdauer der Anlagentechnik erhöht werden kann.

Erfindungsgemäß wird diese Aufgabe mit einer Vorrichtung, die die Merkmale des Anspruchs 1 aufweist, gelöst. Dabei kann mit einem Verfahren nach Anspruch 13 gearbeitet werden. Vorteilhafte Ausgestaltungen und Weiterbildungen der Erfindung können mit in untergeordneten Ansprüchen bezeichneten Merkmalen erreicht werden.

Die erfindungsgemäße Vorrichtung baut auf bekannten technischen Lösungen auf. Auch hier wird ein bevorzugt kollimierter Laserstrahl über mindestens ein schwenkbares reflektierendes Element, eine fokussierende Optik durch die Öffnung einer Schneiddüse auf die Oberfläche eines Werkstücks gerichtet, um eine schneidende Bearbeitung durchzuführen. Durch die Schneiddüse wird auch das Schneidgas zum Werkstück geführt, wobei dies konzentrisch um den Laserstrahl erfolgen sollte. Die genannten Elemente sind dabei in einem Schneidkopf aufgenommen oder mit ihm verbunden.

Mit dem/den reflektierenden Element(en), die auch als Scannerspiegel bezeichnet werden können, kann eine zweidimensionale Auslenkung des Laserstrahls durch die Öffnung der Schneiddüse erreicht werden. Mit der dadurch bewirkten Auslenkung kann ein größerer Bearbeitungsbereich (Scannfeld) berücksichtigt werden. Die Relativbewegung und die Auslenkbewegung können überlagert werden, wobei dies insbesondere im Bereich größerer Vorschubachsrichtungsänderungen mit kleineren Radien erfolgen sollte, um die Maschinendynamik zu erhöhen und die auf die Anlagenkomponenten wirkenden Belastungen (beschleunigungsbedingte Kräfte und Momente) zu reduzieren.

Da erfindungsgemäß der Laserstrahl mit dem Schneidgas gemeinsam auf die Werkstückoberfläche gerichtet werden soll, ist auch eine zweidimensionale Bewegung der Schneiddüse durchzuführen, die zumindest mit der Auslenkung des Laserstrahls synchronisiert sein sollte. Die Schneiddüse ist dabei am Schneidkopf so angeordnet und daran befestigt, dass sie mit mindestens einem Antrieb zusätzlich zu den bereits erläuterten Bewegungen ebenfalls zweidimensional parallel zur Oberfläche des zu bearbeitenden Werkstückes bewegt werden kann. Die Öffnung der Schneiddüse folgt somit der Auslenkbewegung des Laserstrahls innerhalb des Bearbeitungsbereichs. Dadurch kann in jeder Position eine konzentrische Zuführung von Schneidgas um den Laserstrahl erreicht werden.

Da es für das Schneiden günstiger ist, den Laserstrahl senkrecht, zumindest nahezu senkrecht, auf die Oberfläche des Werkstücks zu richten, sollte eine hierfür geeignete fokussierende Optik eingesetzt werden. Dies kann eine telezentrische Planfeld-Optik und/oder eine telezentrische F-Theta Optik sein. Trifft der durch Reflexion ausgelenkte Laserstrahl a0uf eine solche Optik auf, wird er so gebrochen und fokussiert, dass er senkrecht auf die Oberfläche des Werkstücks auftrifft und ein durch die Reflexion für die Auslenkung aufgetretener geneigter Winkel wieder kompensiert wird. Bei kleinen Auslenkungen kann auch eine einfache fokussierende Optik eingesetzt werden, um die Kosten zu reduzieren. Dabei sollte für eine ausreichende Telezentriebedingung, die optische Achse der Scannerspiegel im gegenstandseitigen Brennpunkt der Optik/linse liegen.

Eine zweidimensionale Bewegung der Schneiddüse kann in einem einfachsten Fall durch eine einfache Rotation erreicht werden. Dabei sollte die Rotation um eine senkrecht zur Werkstückoberfläche ausgerichtete Achse, die auch parallel zur optischen Achse des fokussierten Laserstrahls ausgerichtet ist, erfolgen. Die Rotationsachse oder die Öffnung durch die Laserstrahl und Schneidgas auf das Werkstück gerichtet werden, ist dann exzentrisch in Bezug zur Normalen im Mittelpunkt des Bearbeitungsbereiches angeordnet. In diesem Fall können die Relativbewegung von Schneidkopf mit Werkstück und die Drehbewegung der Schneiddüse so synchronisiert werden, dass die Austrittsöffnung der Schneiddüse mit einem geeigneten Winkel, der die jeweilige momentane Vorschubachsrichtung und Auslenkung des Laserstrahls berücksichtigt, ausgerichtet ist.

Dabei kann besonders vorteilhaft ein Doppelexzenterantrieb mit zwei unabhängig voneinander ansteuerbaren Antriebsmotoren eingesetzt werden. Dabei können zwei scheibenförmige Elemente, die mit jeweils einem Antriebsmotor verdreht werden können, als Träger für die dementsprechend bewegbare Schneiddüse vorgesehen werden. Die Antriebsmotore sollten unabhängig voneinander angesteuert werden können, so dass ihre Drehrichtung und der zurückgelegte Drehwinkel zu gleichen Zeiten unterschiedlich sein können. Die Schneiddüse, zumindest aber die Austrittsöffnung für Laserstrahl und Schneidgas, ist dabei mit einem scheibenförmigen Element verbunden und sollte dabei exzentrisch an diesem angeordnet und befestigt sein. Wird dieser Exzenter nicht, der zweite Exzenter aber gedreht, bewegt sich die Schneiddüse auf einer Kreisbahn. Werden beide Exzenter gleichzeitig gedreht, wird eine deutlich höhere Bewegungsflexibilität der Schneiddüse und der Austrittsöffnung durch einen Doppelexzenterantrieb möglich. Durch die mögliche Überlagerung der beiden Exzenterkreisbahnen können alle Positionen eines Bearbeitungsbereichs erreicht werden. Sind die beiden Exzentrizitäten gleich groß sind, kann der vollständige Bearbeitungsbereich erreicht werden. Falls dies nicht der Fall ist, kann ein zentraler ringförmiger Bereich nicht erreicht werden.

Die Übertragung der Drehmomente der Antriebsmotore zu den Exzentern bzw. scheibenförmigen Elemente kann über Verzahnungen aber auch mittels Reibrädern oder Zahnriemen erreicht werden.

Die scheibenförmigen Elemente eines solchen Exzenterantriebs können ineinander greifend angeordnet sein.

Gleiches trifft auch für die beiden Antriebsmotore zu, die ineinander liegend angeordnet sein können. Dabei kann einer der Antriebsmotore deutlich kleiner als der andere dimensioniert und ausgelegt sein, da er lediglich die Eigenmasse der zu bewegenden Schneiddüse berücksichtigen muss. Der äußere Antrieb bewegt den inneren Antrieb mit.

Der Doppelexzenterantrieb kann aber auch so ausgebildet sein, dass zwei miteinander verbundene Exzenterantriebe übereinander angeordnet sind und eine "Huckepack-Anordnung" bilden. Dabei muss aber einer der Antriebsmotore so ausgelegt sein, dass er die Gesamtmasse des Doppelexzenterantriebs bewegen kann.

Als Antriebsmotore für einen Drehantrieb können bevorzugt so genannte Torquemotore, als eine besonders geeignete Form für einen Direktantrieb, eingesetzt werden. Diese haben kurze Ansprechzeiten und sind sehr genau und schnell (dynamisch) steuerbar.

Die erfindungsgemäß gewünschte Bewegung der Schneiddüse kann aber auch mit mindestens zwei jeweils einzeln ansteuerbaren Linearantrieben erreicht werden. Zwei Linearantriebe sollten dann möglichst 90° versetzt zueinander an der Schneiddüse angreifen und in den senkrecht zueinander ausgerichteten Achsen linear wirken können. Es können aber auch mehr solcher Linearantriebe eingesetzt werden. Mit vier in 90° Winkelabstand zueinander angeordneten Linearantrieben kann die Steifigkeit erhöht und die Bewegung besser gesteuert und besser kompensiert werden.

Besonders geeignete Linearantriebe sind beispielsweise Tauchspulen (voice coil) oder Magnetantriebe (moving magnet). Es können aber auch hydraulische oder pneumatische Antriebe und ggf. auch andere geeignete Linearantriebe eingesetzt werden.

Die Elemente, die für die Beeinflussung des Vorschubs bei der Bearbeitung vorhanden sind, also die die für die Relativbewegung Schneidkopf - Werkstück, der Schneiddüse und für die Auslenkung des Laserstrahls vorhanden sind, sollen synchron gesteuert werden, wofür eine elektronische Steuereinheit eingesetzt werden kann. Diese kann entsprechend der gewünschten am Werkstück auszubildenden Bearbeitungskontur programmiert werden. Dabei kann eine Optimierung bei der Steuerung der jeweiligen Bewegungen vorgenommen werden, um eine ausreichende Qualität, Fertigungsgenauigkeit bei maximaler Bearbeitungsgeschwindigkeit unter Einhaltung aller dynamischen Grenzen, erreichen zu können.

Durch die erfindungsgemäße Ausbildung kann ein Bearbeitungsbereich durch die Auslenkbarkeit des Laserstrahls in Verbindung mit der Bewegungsmöglichkeit der Schneiddüse abgedeckt werden, der eine Mindestgröße von 4 mm², bevorzugt mindestens 7 mm² aufweist. Es sind aber deutlich größere Flächen möglich, die bis hin zu 2500 mm² oder gar 6500 mm² groß sein können. Die Bewegung der Schneiddüse sollte so erfolgen können, dass jede Position innerhalb des Bearbeitungsbereichs mit dem Laserstrahl und der Schneiddüse erreicht werden kann.

Optional kann auch eine Bewegung des Schneidkopfes oder auch Teilen eines Schneidkopfes in einer z-Achsrichtung, also senkrecht in Bezug zur Werkstückoberfläche, möglich sein, um den Abstand der Austrittsöffnung der Schneiddüse zur Werkstückoberfläche verändern bzw. anpassen zu können. Hierfür kann auch der jeweilige Abstand detektiert und für eine Abstandsregelung genutzt werden.

Bei der Erfindung besteht auch die Möglichkeit die Brennweite zu verändern bzw. die Position des Brennpunktes des Laserstrahls den jeweiligen momentanen Anforderungen, also auch an den Abstand des Schneidkopfes zur Bearbeitungsebene des Werkstücks anzupassen.

Außerdem besteht die Möglichkeit eine zusätzliche oszillierende Auslenkbewegung des Laserstrahls durch entsprechende Ansteuerung des/der reflektierenden Elemente(s) durchzuführen, die der bis hier hin beschriebenen Auslenkung überlagert werden kann. So kann dabei zusätzlich beispielsweise eine linear zwischen Umkehrpunkten oszillierende Auslenkung parallel zur jeweiligen Vorschubachsrichtung oder auch eine einem Sinusverlauf folgende Auslenkung vorgenommen werden.

Innerhalb des Schneidkopfes kann ein Druckraum für Schneidgas, der an eine Gaszuführung angeschlossen und gegenüber der Umgebung gasdicht ist, vorhanden sein. Die Schneiddüse kann dabei einen Abschluss bilden.

Mit der erfindungsgemäßen Vorrichtung kann die mittlere Vorschubgeschwindigkeit deutlich erhöht werden, da auch in kritischen Bereichen in denen große Veränderungen der Vorschubachsrichtung mit kleinen Radien durchgeführt werden müssen, höhere Vorschubgeschwindigkeiten erreicht werden können, indem die Hauptachsen eine überschleifende Bahn fahren, und die Zusatzachsen der scharfen Richtungsänderung folgen. Mit der Erfindung kann die mittlere Vorschubgeschwindigkeit deutlich erhöht werden, da auch in kritischen Bereichen in denen große Veränderungen der Vorschubachsrichtung mit kleinen Radien durchgeführt werden müssen, höhere Vorschubgeschwindigkeiten erreicht werden können, indem die Hauptachsen eine überschleifende und dadurch verkürzte Bahn fahren, während die Zusatzachsen der scharfen Richtungsänderung folgen. Auf dieser überschleifenden, verkürzten Bahn können die Hauptachsen eine höhere Vorschubgeschwindigkeit als beim exakten Einhalten des Konturübergangs realisieren. Um aber die geforderte Schneidkontur auszubilden, werden der Laserstrahl und die Schneidgasdüse durch die hochdynamischen Zusatzachsen exakt auf der vorgegebenen Schneidkontur geführt. Durch die deutlich höheren Beschleunigungs- und Ruckwerte der hochdynamischen Zusatzachsen, im Vergleich zu den Hauptachsen, muss dabei der Laserstrahl nicht so stark verzögert und kann wieder schneller beschleunigt werden als bei der Bewegung mit den Hauptachsen auf dem gleichen Konturübergang. Das führt zu einer erheblich höheren mittleren Vorschubgeschwindigkeit des schneidenden Laserstrahles und verkürzt so den Zeitbedarf für diesen Abschnitt der auszubildenden Schneidkontur.

Das Schneidgas kann mit ausreichender Strömungsgeschwindigkeit und Volumenstrom aus der Schneiddüse in den Schnittspalt gerichtet werden, was konzentrisch um den Laserstrahl möglich ist. Die innere Gestaltung der Schneiddüse kann so gewählt werden, dass sich günstige Strömungsverhältnisse und dadurch ein ausreichender Staudruck des Schneidgases am Werkstück erreichen lassen und dabei auch der Laserstrahl problemlos durch die Öffnung der Schneiddüse auf das Werkstück gerichtet werden kann. Dabei kann eine konische, konisch-zylindrische, schlitzförmige ovale Ausbildung oder auch eine Lavalgeometrie gewählt werden.

Nachfolgend soll die Erfindung beispielhaft näher erläutert werden.

Dabei zeigen:
Figur 1 in einer schematischen Schnittdarstellung ein Beispiel einer erfindungsgemäßen Vorrichtung;
Figur 1a das Beispiel nach Figur 1 mit durch Reflexion ausgelenktem Laserstrahl;
Figur 2 in schematischer Darstellung ein Beispiel mit einem Doppelexzenterantrieb einer Schneiddüse;
Figur 3 in schematischer Darstellung ein weiteres Beispiel mit einem Doppelexzenterantrieb einer Schneiddüse;
Figur 4 in schematischer Darstellung eine mögliche Anordnung von Antriebsmotoren an einem Doppelexzenterantrieb für eine Schneiddüse;
Figur 5 in schematischer Darstellung eine weitere mögliche Anordnung von Antriebsmotoren an einem Doppelexzenterantrieb für eine Schneiddüse;
Figuren 6 und 6a in schematischer Darstellung eine Schneiddüse mit außen angreifenden Linearantrieben;
Figuren 7 und 7a mit einem Doppelexzenterantrieb realisierbare Bewegungsmöglichkeiten an einer Schneiddüse und
Figuren 8 und 8a mögliche Achsbewegungen bei der Ausbildung eines Schnitts mit einem Richtungswechsel von 90°.

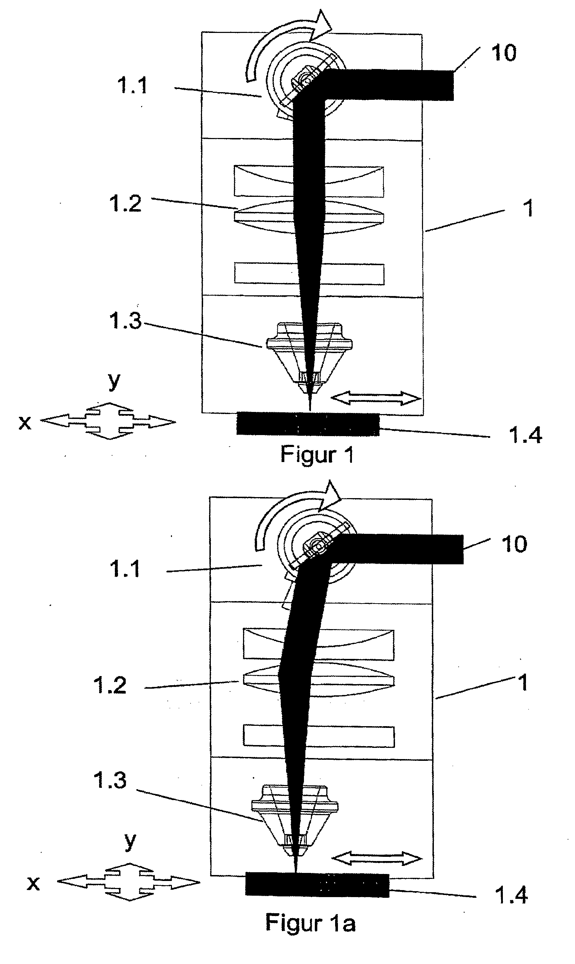

In Figur 1 ist in schematischer Form ein möglicher Aufbau einer erfindungsgemäßen Vorrichtung gezeigt. Innerhalb eines Schneidkopfes 1 ist hier ein schwenkbares reflektierendes Element 1.1 angeordnet. Auf die Darstellung eines zweiten reflektierenden Elementes, mit dem eine Auslenkung des Laserstrahls 10 um eine zweite Achse möglich ist, ist hier verzichtet worden. Der vom reflektierenden Element 1.1 reflektierte Laserstrahl 10 trifft auf eine fokussierende Optik 1.2, die hier als telezentrische Planfeld-Optik ausgebildet ist, und wird so, wie dargestellt, entsprechend der Auslenkung in fokussierter Form durch eine Öffnung einer Schneiddüse 1.3 in Richtung auf ein zu schneidendes Werkstück 1.4 gerichtet. Mit der hier eingesetzten Optik 1.2 wird der Laserstrahl 10 immer senkrecht in Richtung auf das Werkstück gerichtet, unabhängig von der Position des Laserstrahls 10 im Arbeitsfeld bzw. dem Auslenkwinkel der Scannerspiegel. Die Schneiddüse 1.3 wird bei der Auslenkung des Laserstrahls 10 immer konzentrisch von diesem nachgeführt. Dies ist mit Figur 1a verdeutlicht. Der gesamte Schneidkopf 1 kann mit an sich bekannten technischen Mitteln zwei- oder ggf. auch dreidimensional bewegt werden. Wobei die Bewegungen überlagert werden können oder mit einem Nachsetzbetrieb gearbeitet wird.

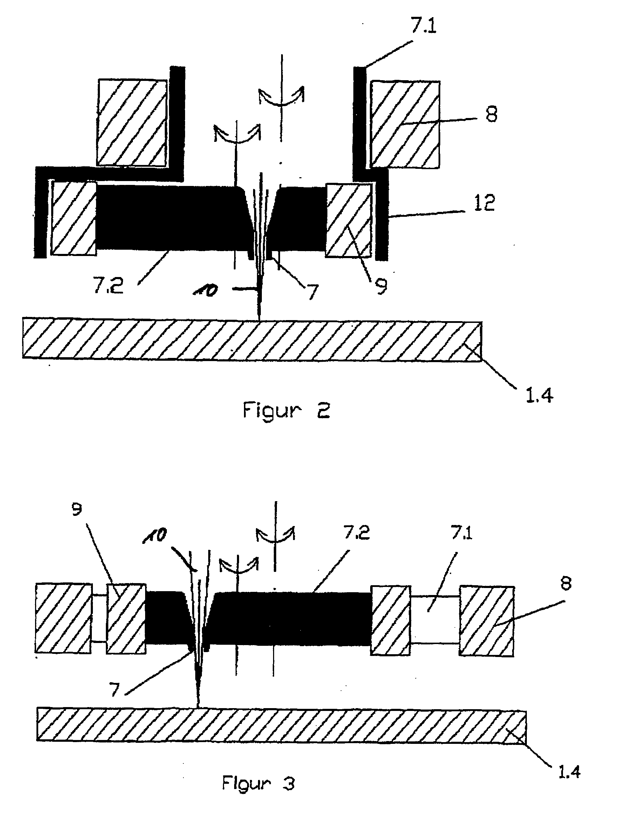

Die Figuren 2 und 3 zeigen Beispiele mit einem Doppelexzenterantrieb für eine Schneiddüse 7. Bei dem Beispiel gemäß Figur 2 ist eine "Huckepackanordnung mit einem vertikal oberen und unteren Exzenter 7.1 und 7.2 gewählt worden. Am oberen Exzenter 7.1 ist radial außen ein Antriebsmotor 8 und am unteren ein Antriebsmotor 9 angebracht. Beide sind hier Torquemotore. Die Verbindung ist mit einem entsprechend ausgebildeten Halter 12 hergestellt, an dem die Antriebsmotore 8 und 9 befestigt sind und angreifen. Der Antriebsmotor 8 wird in einem Gehäuse (Schneidkopf) gehalten.

Es wird deutlich, wie die Öffnung der Schneiddüse durch Bewegung der Exzenter 7.1 und 7.2 verschoben und deren Position an die momentane Auslenkung des Laserstrahls 10 auch unter Berücksichtigung der gleichzeitig durchgeführten Relativbewegung von Werkstück und Schneidkopf 1 mit der Auslenkung des Laserstrahls 10 angepasst werden kann. Die beiden Antriebsmotore 8 und 9 müssen dabei lediglich die Bewegung des jeweiligen Exzenters 7.1 oder 7.2 realisieren, wohingegen der Antrieb 8 auch den anderen Antrieb 9 und den Halter 12 bewegen muss.

Bei dem in Figur 3 gezeigten Beispiel sind die beiden Exzenter 7.1 und 7.2 ineinander liegend angeordnet und bilden auch eine "Huckepack-Anordnung". Am äußeren Exzenter 7.1 ist radial außen angreifend ein Antriebsmotor 8 angeordnet, mit dem eine Drehbewegung dieses Exzenters 7.1 erfolgen kann. Im Inneren des Exzenters 7.1 ist an diesem ein weiterer Antriebsmotor 9 befestigt, mit dem eine Drehbewegung des inneren Exzenters 7.2 möglich ist. Der äußere Antriebsmotor 8 muss dabei unter Berücksichtigung der gesamten zu bewegenden Massen ausgewählt sein, wohingegen der Antriebsmotor 9 lediglich den innen Angeordneten Exzenter 7.2 mit Schneiddüse 7 bewegen muss.

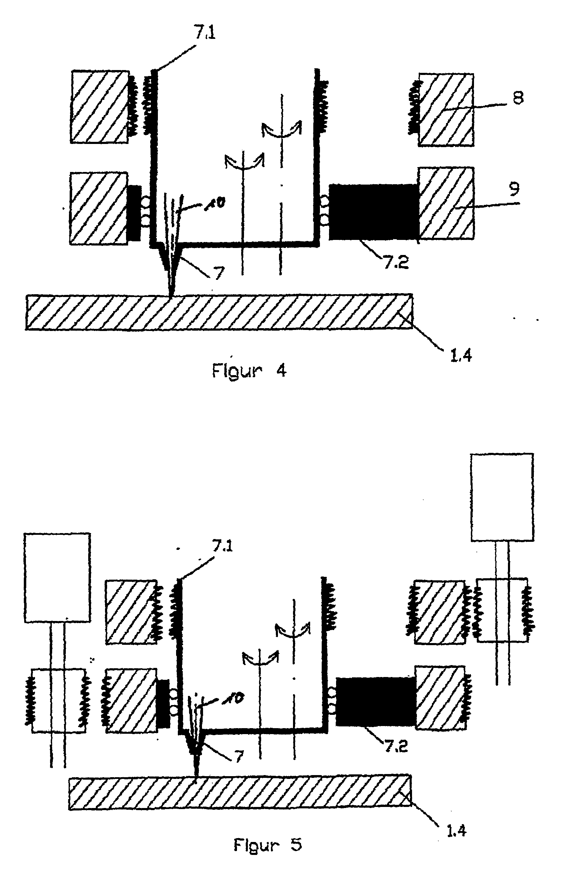

Die Figuren 4 und 5 zeigen mögliche Anordnungen für Antriebsmotore 8 und 9 an einem Doppelexzenterantrieb. Die beiden Exzenter 7.1 und 7.2 sind über eine Innenverzahnung gekoppelt. Mit einem der Exzenter, der im anderen Exzenter angeordnet ist, kann die Schneiddüse 7 auf einer exzentrischen Bahn um eine Rotationsachse geführt werden. Beim Beispiel nach Figur 4 greifen die Antriebsmotore 8 und 9 jeweils direkt radial außen an einem Exzenter 7.1 über eine Verzahnung und 7.2 an.

Bei dem Beispiel nach Figur 5 ist dies mittels einer Zahnradgetriebeübersetzung realisiert.

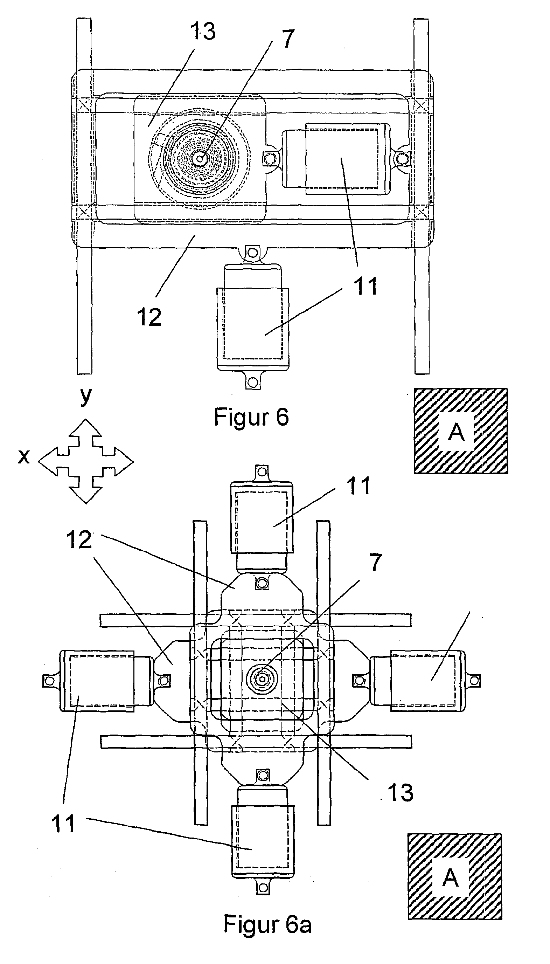

Eine andere mögliche Ausbildung, mit der eine gezielte zweidimensionale Bewegung der Schneiddüse 7 mit ihrer Öffnung möglich ist, ist in Figuren 6 und 6a schematisch im Schnitt dargestellt. Beim in Figur 6 gezeigten Beispiel sind zwei und bei Figur 6a sind vier Linerantriebe 11, hier als Tauchspulen ausgebildet, eingesetzt worden. Die Linearantriebe 11 sind jeweils um 90 ° versetzt zueinander angeordnet und mit der Schneiddüse 7 über Tische (Schlitten) 12 und 13 verbunden. Jeder der Linearantriebe 11 wird einzeln angesteuert und die Schneiddüse 7 kann zweidimensional in jede Position innerhalb des durch die maximale Weglänge der Linerantriebe 11 vorgegebenen Bearbeitungsbereichs bewegt werden. Bei dem in Figur 6a gezeigten Beispiel ist eine parallelkinematische Kreuztischanordnung gewählt, bei der zwei Tische 12 übereinander angeordnet und so gelagert sind, dass die Antriebe feststehen und mit dem Gehäuse verbunden sind und nicht als "Huckepack-Anordnung" einer der Linearantriebe 11 mit bewegt werden muss. Je zwei Linearantriebe 11 bewegen einen Tisch 12 in nur einer Richtung. Dabei ist ein weiterer Tisch 13, der die Schneiddüse 7 trägt, zwischen Tisch 12 geeignet gelagert, so dass er sich bei Bewegung eines der Tisch 12 in dessen Bewegungsrichtung mit bewegen kann. Beim Beispiel nach Figur 6 muss dagegen einer der beiden Linearantriebe 11 neben den Tischen (Schlitten) 12 und 13 auch die Masse des anderen Linearantriebs zusätzlich bewältigen.

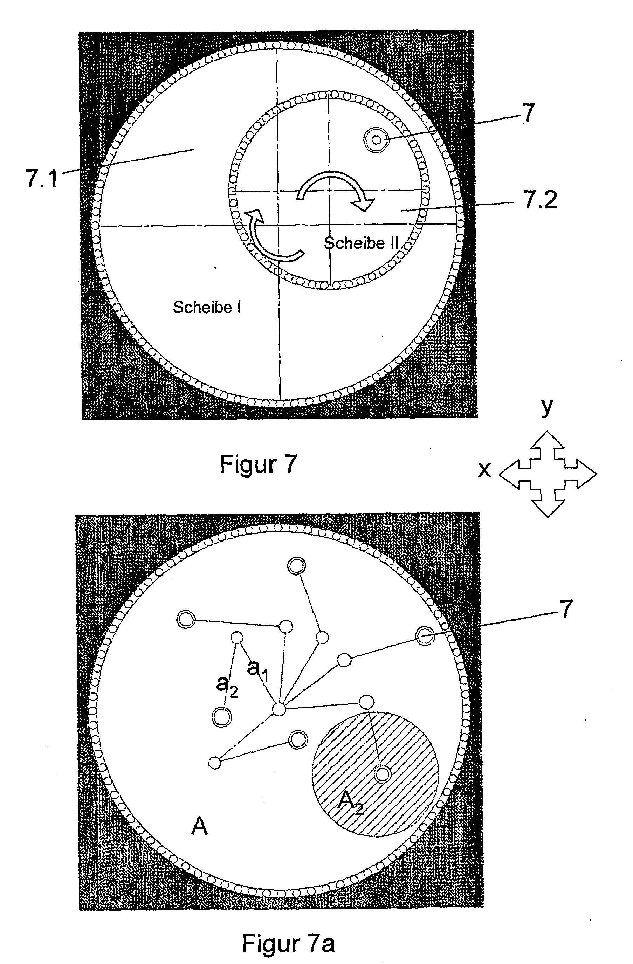

Mit den Figur 7 und 7a sollen mit einem Doppelexzenterantrieb realisierbare Bewegungsmöglichkeiten an einer Schneiddüse 7 verdeutlicht werden. Dabei kann bei diesem, wie auch bei anderen erfindungsgemäßen Beispielen, neben einer kreisrunden Öffnung der Schneiddüse 7 durch die Laserstrahl 10 und Schneidgas auf das Werkstück 1.4 gerichtet werden können, auch eine andere geometrische Gestalt der Öffnung gewählt werden. Dies kann eine elliptische Gestaltung oder auch die Ausbildung in Form einer Schlitzdüse sein. Eine Schlitzdüse sollte dabei dann in der Drehachse eines der Exzenter angeordnet sein, so dass sie bei dessen Drehung lediglich um diese Achse gedreht wird.

Die beiden Exzenter 7.1 und 7.2 können unabhängig voneinander angetrieben werden und rotieren. Dadurch kann der gesamte Bearbeitungsbereich A durch die resultierende Bewegung der Schneiddüse 7 abgedeckt werden, was insbesondere mit Figur 7a verdeutlicht ist. Dabei kann die Kinematik eines planaren Knickarmroboters realisiert sein. Bei der Steuerung der Bewegung der Exzenter 7.1 und 7.2 können ein oder beide gleichzeitig rotieren. Auch die Drehrichtung kann variiert werden. Für eine mögliche Bearbeitung im gesamten Bearbeitungsbereich A sollten die Exzentrizitäten gleich groß sein. dadurch kann dort jede Position erreicht werden. Zur Erhöhung der Dynamik kann so gesteuert werden, dass die Schneiddüse 7 möglichst im radial äußeren Randbereich (z.B. im Bereich A1) bewegt wird. Dadurch können die Hebelverhältnisse der Exzenter besser ausgenutzt werden, da dann eine kleine Bewegung, mit entsprechendem Drehwinkel, einen größeren von der Schneiddüse 7 zurück gelegten Weg ermöglicht. Bei der Ausbildung in Form einer Schlitzdüse kann auch deren Ausrichtung unter Berücksichtigung der jeweiligen Vorschubachsrichtung mit berücksichtigt werden.

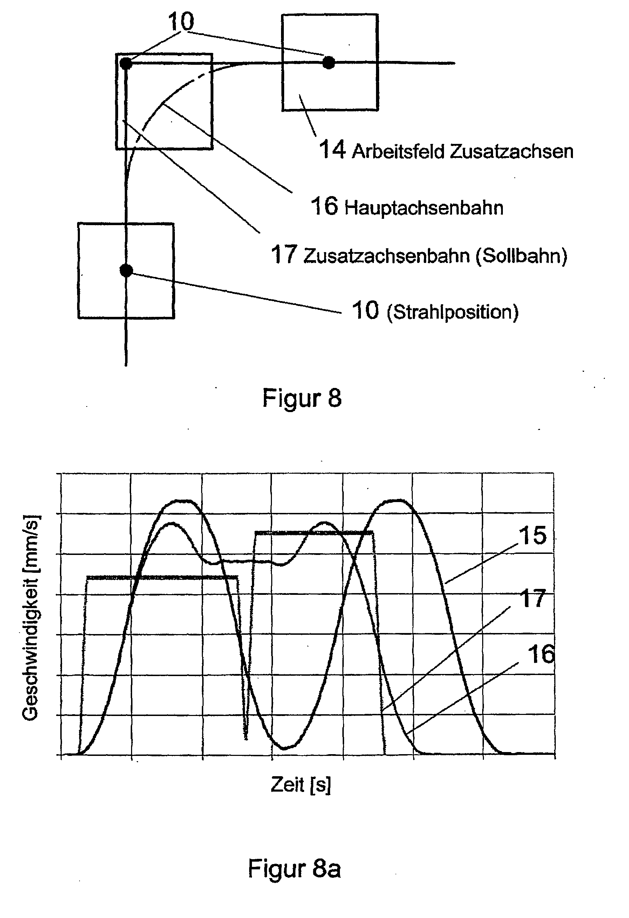

Mit Figur 8 soll in schematischer Form ein Bearbeitungsverlauf in mehreren überlagerten Achsen an einem Beispiel verdeutlicht werden. Dabei soll ein Schnitt mit einem Richtungswechsel von 90° ausgebildet werden. Die Hauptachsen überstreichen diese rechteckige Kontur in einer vorgegebenen Form (Radius-, Polynom-, Spline-Bahn, oder bei anderen Konturen mit steuerungsoptimierten Bahnen). Der Laserstrahl 10 wird durch die Zusatzachsen auf einer vorgegebenen Sollbahn gehalten. Die Arbeitsfeldgröße stellt dabei die Grenze dar, wie weit die Hauptachsenbahn von der Sollbahn abweichen darf.

Figur 8a zeigt die Vorschubgeschwindigkeit einer realen Laserschneidanlage bei Ausbildung eines Schnitts mit einem Richtungswechsel von 90°. Einmal mit einem Überschleifen (Verlauf 16) und einmal ohne Überschleifen (Verlauf 15) und die resultierende Bearbeitungsgeschwindigkeit mit überlagerten Achsen (Verlauf 17). Es ist dabei deutlich erkennbar, dass die Vorschubgeschwindigkeit beim Umfahren einer scharfen Ecke nur mit den Hauptachsen im Scheitel der auszubildenden Kontur stark einbricht, was durch die dynamischen Grenzen der Achsen bestimmt ist (Ruck/Beschleunigung) gemäß dem Kurvenverlauf 15. Durch das Überschleifen des Konturübergangs müssen die Achsgeschwindigkeiten nur geringfügig reduziert werden, um die dynamischen Grenzen der Hauptachsen einzuhalten (Kurvenverlauf 16).

Der Kurvenverlauf 17 entspricht der Bewegung der Hauptachsen gemäß Verlauf 15, die mit der Bewegung der Zusatzachsen überlagert ist, was dann der resultierenden Bearbeitungsgeschwindigkeit auf dem Werkstück 1.4 entspricht.

## Patentansprüche

1. Vorrichtung zum schneidenden Bearbeiten von Werkstücken mit einem Laserstrahl, bei der ein Laserstrahl mittels mindestens eines reflektierenden schwenkbaren Elementes zweidimensional auslenkbar und mit einer fokussierenden Optik durch eine Schneiddüse gemeinsam mit einem Schneidgas auf die Oberfläche des Werkstücks gerichtet ist und dabei eine zweiachsige Relativbewegung zwischen Werkstück und Laserstrahl mit in einem Schneidkopf aufgenommenen Elementen durchführbar ist,
**dadurch gekennzeichnet, dass**
die am Schneidkopf (1) befestigte Schneiddüse (1.3, 7), zur Bearbeitung eines vergrößerten Bearbeitungsbereichs, mittels mindestens eines Antriebs (8, 9, 11) zusätzlich in zwei Achsrichtungen parallel zur Oberfläche des Werkstücks bewegbar ist.

2. Vorrichtung nach Anspruch 1, **dadurch gekennzeichnet, dass** die fokussierende Optik (1.2) eine telezentrische Planfeld-Optik und/oder eine telezentrische F-Theta Optik ist.

3. Vorrichtung nach Anspruch 1 oder 2, **dadurch gekennzeichnet, dass** die Schneiddüse (1.3, 7) um eine senkrecht zur Werkstückoberfläche ausgerichtete Achse rotiert.

4. Vorrichtung nach Anspruch 3, **dadurch gekennzeichnet, dass** die Rotationsachse der Schneiddüse (1.2, 7) oder die Öffnung der Schneiddüse exzentrisch in Bezug zur Längsachse des Schneidkopfs (1) angeordnet ist.

5. Vorrichtung nach einem der vorhergehenden Ansprüche, **dadurch gekennzeichnet, dass** für die Bewegung der Schneiddüse (1.3, 7) ein Exzenterantrieb (7) vorhanden ist.

6. Vorrichtung nach Anspruch 4 oder 5, **dadurch gekennzeichnet, dass** ein Doppelexzenterantrieb (7.1, 7.2) mit zwei unabhängig voneinander ansteuerbaren Antriebsmotoren (8, 9) vorhanden ist.

7. Vorrichtung nach einem der Ansprüche 1 bis 5, **dadurch gekennzeichnet, dass** zwei miteinander verbundene Exzenterantriebe (7.1 und 7.2) übereinander oder ineinander angeordnet sind.

8. Vorrichtung nach einem der vorhergehenden Ansprüche, **dadurch gekennzeichnet, dass** durch die Bewegung der Schneiddüse (1.3, 7) und die Auslenkung des Laserstrahls (10) ein Bearbeitungsbereich am Werkstück mit einer Fläche von mindestens 4 mm² abdeckbar ist.

9. Vorrichtung nach einem der vorhergehenden Ansprüche, **dadurch gekennzeichnet, dass** die Bewegung der Schneiddüse (7) mit mindestens zwei jeweils einzeln ansteuerbaren Linearantrieben (11) erreichbar ist.

10. Vorrichtung nach Anspruch 9, **dadurch gekennzeichnet, dass** Tauchspulen, pneumatische oder hydraulische Antriebe eingesetzt sind.

11. Vorrichtung nach einem der vorhergehenden Ansprüche, **dadurch gekennzeichnet, dass** die Öffnung der Schneiddüse (1.3, 7), durch die Laserstrahl (10) und Schneidgas auf das Werkstück gerichtet sind, kreisrund, elliptisch oder als Schlitzdüse ausgebildet ist.

12. Vorrichtung nach einem der vorhergehenden Ansprüche, **dadurch gekennzeichnet, dass** die Schneiddüse(7) mit einer parallelkinematischen Kreuztisch-Anordnung gehalten ist und Linearantriebe (11) jeweils einzelne Tische (12) bewegen, die einen Tisch (13) halten.

13. Verfahren zum schneidenden Bearbeiten von Werkstücken mit einem Laserstrahl unter Verwendung einer Vorrichtung nach einem der vorhergehenden Ansprüche, **dadurch gekennzeichnet, dass** ein Schneidkopf (1) und ein zu bearbeitendes Werkstück zweidimensional zueinander bewegbar sind; dabei der Laserstrahl (10) mittels mindestens eines schwenkbaren reflektierenden Elements (1.1) sowie eine mit dem Schneidkopf (1) verbundene Schneiddüse (1.3, 7), durch die der vorab mit einer fokussierenden Optik (1.2) fokussierte Laserstrahl (10) und ein Schneidgas auf die Oberfläche des Werkstücks (1.4) gerichtet werden, ebenfalls zweidimensional ausgelenkt werden, um eine Bearbeitung eines vergrößerten Bearbeitungsbereichs zu erreichen; und dabei die Bewegungen des Schneidkopfes (1) und/oder Werkstücks, des/der reflektierenden Elemente(s) (1.1) und der Schneiddüse (1.3, 7) jeweils einzeln in Abhängigkeit einer vorgegebenen Bearbeitungskontur von einer elektronischen Steuereinheit gesteuert werden.

14. Verfahren nach Anspruch 13, **dadurch gekennzeichnet, dass** der mit dem/den reflektierenden Element(en) (1.1) ausgelenkte Laserstrahl (10) mit einer fokussierenden telezentrischen Planfeld-Optik (1.2) bei der Bearbeitung innerhalb des Bearbeitungsbereichs an jeder Position senkrecht auf die Oberfläche des Werkstücks gerichtet wird.

15. Verfahren nach Anspruch 13 oder 14, **dadurch gekennzeichnet, dass** die Schneiddüse (1.3, 7) so bewegt wird, dass jede erforderliche Position des Bearbeitungsbereichs (A) vom Laserstrahl (10) auf dem Werkstück (1.4) erreicht wird.

## Claims

1. A device for the cutting machining of workpieces with a laser beam, in which a laser beam can be deflected in two dimensions by means of at least one reflecting pivotable element and is directed onto the surface of the workpiece with a focusing optical system through a cutting nozzle together with a cutting gas, and by so doing a biaxial relative movement between the workpiece and laser beam can be carried out with elements held in a cutting head,
**characterised in that** the cutting nozzle (1.3, 7) which is fastened to the cutting head (1), in order to machine an enlarged machining zone, is movable additionally in two axial directions parallel to the surface of the workpiece by means of at least one drive (8, 9, 11).

2. A device according to Claim 1, **characterised in that** the focusing optical system (1.2) is a telecentric flat field optical system and/or a telecentric F-theta optical system.

3. A device according to Claim 1 or 2, **characterised in that** the cutting nozzle (1.3, 7) rotates about an axis oriented perpendicular to the workpiece surface.

4. A device according to Claim 3, **characterised in that** the axis of rotation of the cutting nozzle (1.2, 7) or the opening of the cutting nozzle is arranged eccentrically relative to the longitudinal axis of the cutting head (1).

5. A device according to one of the preceding claims, **characterised in that** an eccentric drive (7) is present for movement of the cutting nozzle (1.3, 7).

6. A device according to Claim 4 or 5, **characterised in that** a double eccentric drive (7.1, 7.2) with two drive motors (8, 9) which can be controlled independently of each other is present.

7. A device according to one of Claims 1 to 5, **characterised in that** two eccentric drives (7.1 and 7.2) connected together are arranged above one another or inside one another.

8. A device according to one of the preceding claims, **characterised in that** owing to the movement of the cutting nozzle (1.3, 7) and the deflection of the laser beam (10) a machining zone on the workpiece with a surface area of at least 4 mm² can be covered.

9. A device according to one of the preceding claims, **characterised in that** the movement of the cutting nozzle (7) can be achieved with at least two linear drives (11) which can each be controlled individually.

10. A device according to Claim 9, **characterised in that** voice coils, pneumatic or hydraulic drives are used.

11. A device according to one of the preceding claims, **characterised in that** the opening of the cutting nozzle (1.3, 7) through which the laser beam (10) and cutting gas are directed onto the workpiece is circular, elliptical or formed as a slotted nozzle.

12. A device according to one of the preceding claims, **characterised in that** the cutting nozzle (7) is held with a parallel kinematic cross-slide table arrangement, and linear drives (11) move in each case individual tables (12) which hold a table (13).

13. A method for the cutting machining of workpieces with a laser beam using a device according to one of the preceding claims, **characterised in that** a cutting head (1) and a workpiece which is to be machined are movable in two dimensions relative to each other;
in so doing, the laser beam (10), by means of at least one pivotable reflecting element (1.1), and also a cutting nozzle (1.3, 7) which is connected to the cutting head (1), through which nozzle the laser beam (10) which has been focused in advance with a focusing optical system (1.2) and a cutting gas are directed on to the surface of the workpiece (1.4), are likewise deflected in two dimensions, in order to achieve machining of an enlarged machining zone; and
in so doing the movements of the cutting head (1) and/or workpiece, of the reflecting element(s) (1.1) and of the cutting nozzle (1.3, 7) are in each case controlled individually as a function of a predetermined machining contour by an electronic control unit.

14. A method according to Claim 13, **characterised in that** the laser beam (10) which is deflected with the reflecting element(s) (1.1) upon the machining is directed perpendicularly on to the surface of the workpiece within the machining zone at every position with a focusing telecentric flat field optical system (1.2).

15. A method according to Claim 13 or 14, **characterised in that** the cutting nozzle (1.3, 7) is moved such that every required position of the machining zone (A) is reached by the laser beam (10) on the workpiece (1.4).

## Revendications

1. Dispositif destiné à l'usinage de coupe de pièces au moyen d'un rayon laser, avec lequel un rayon laser peut être orienté de manière bidimensionnelle, à l'aide d'au moins un élément réfléchissant pivotant, et dirigé, conjointement à un gaz de coupe, avec une optique de focalisation, vers la surface de la pièce à travers une buse de coupe, un déplacement relatif, sur deux axes, de la pièce et du rayon laser l'un par rapport à l'autre pouvant alors être effectué avec des éléments logés dans une tête de coupe,
**caractérisé en ce que**
la buse de coupe (1.3, 7) fixée sur la tête de coupe (1) est mobile, pour l'usinage d'une zone d'usinage agrandie, à l'aide d'au moins un dispositif d'entraînement (8, 9, 11), dans deux directions axiales supplémentaires parallèles à la surface de la pièce.

2. Dispositif selon la revendication 1, **caractérisé en ce que** l'optique de focalisation (1.2) est une optique à champ plat télécentrique et/ou une optique F-Thêta télécentrique.

3. Dispositif selon la revendication 1 ou 2, **caractérisé en ce que** la buse de coupe (1.3, 7) tourne autour d'un axe orientée perpendiculairement par rapport à la surface de la pièce.

4. Dispositif selon la revendication 3, **caractérisé en ce que** l'axe de rotation de la buse de coupe (1.2, 7) ou l'ouverture de la buse de coupe est disposée de manière excentrée par rapport à l'axe longitudinal de la tête de coupe (1).

5. Dispositif selon l'une des revendications précédentes, **caractérisé en ce que**, pour le déplacement de la buse de coupe (1.3, 7), un entraînement à excentrique (7) est prévu.

6. Dispositif selon la revendication 4 ou 5, **caractérisé en ce qu'**un entraînement par double excentrique (7.1, 7.2) avec deux moteurs d'entraînement (8, 9) contrôlables indépendamment l'un de l'autre est prévu.

7. Dispositif selon l'une des revendications 1 à 5, **caractérisé en ce que** deux entraînements à excentriques (7.1 et 7.2) reliés entre eux sont disposés l'un au-dessus de l'autre ou l'un dans l'autre.

8. Dispositif selon l'une des revendications précédentes, **caractérisé en ce que**, du fait du déplacement de la buse de coupe (1.3, 7) et de l'orientation du rayon laser (10), une zone d'usinage de la pièce présentant une surface d'au moins 4 mm² peut être couverte.

9. Dispositif selon l'une des revendications précédentes, **caractérisé en ce que** le déplacement de la buse de coupe (7) peut être obtenu avec au moins deux entraînements linéaires (11) contrôlables individuellement.

10. Dispositif selon la revendication 9, **caractérisé en ce que** des bobines mobiles et des entraînements pneumatiques ou hydrauliques sont utilisés.

11. Dispositif selon l'une des revendications précédentes, **caractérisé en ce que** l'ouverture de la buse de coupe (1.3, 7) à travers laquelle le rayon laser (10) et le gaz de coupe est dirigé vers la pièce, présente une forme circulaire, elliptique ou la forme d'une buse fendue.

12. Dispositif selon l'une des revendications précédentes, **caractérisé en ce que** la buse de coupe (7) est maintenue par un dispositif de table XY à cinématique parallèle et **en ce que** des entraînements linéaires (11) déplacent chacun des tables individuelles (12) qui maintiennent une table (13).

13. Procédé d'usinage de coupe de pièces avec un rayon laser à l'aide d'un dispositif selon l'une des revendications précédentes, **caractérisé en ce qu'**une tête de coupe (1) et une pièce à usiner sont mobiles l'une par rapport à l'autre de manière bidimensionnelle ; le rayon laser (10) étant également orienté, de manière bidimensionnelle, à l'aide d'au moins un élément réfléchissant pivotant (1.1), ainsi qu'une buse de coupe (1.3, 7), reliée à la tête de coupe (1) et à travers laquelle le rayon laser (10), focalisé préalablement par une optique de focalisation (1.2), et un gaz de coupe sont dirigés vers la surface de la pièce (1.4), afin d'obtenir l'usinage d'une zone d'usinage agrandie ; les déplacements de la tête de coupe (1) et/ou de la pièce, du ou des élément(s) réfléchissant(s) (1.1) et de la buse de coupe (1.3, 7) étant contrôlés individuellement en fonction d'un contour d'usinage prédéterminé par une unité de commande électronique.

14. Procédé selon la revendication 13, **caractérisé en ce que** le rayon laser (10), orienté avec l'élément ou les éléments réfléchissant(s) (1.1), est dirigé, au cours de l'usinage, avec une optique à champ plat (1.2) télécentrique de focalisation, à l'intérieur de la zone d'usinage à chaque position perpendiculairement par rapport à la surface de la pièce.

15. Procédé selon la revendication 13 ou 14, **caractérisé en ce que** la buse de coupe (1.3, 7) est déplacée de façon à ce que chaque position nécessaire de la zone d'usinage (A) est atteinte par le rayon laser (10) sur la pièce (1.4).
